# EUROPÄISCHE PATENTSCHRIFT

(11) **EP 1 902 192 B1**
(45) Veröffentlichungstag und Bekanntmachung des Hinweises auf die Patenterteilung: **10.09.2014**
(21) Anmeldenummer: 06755228.1
(22) Anmeldetag: 17.05.2006
(51) Int. Cl.: E05F 15/10, H02K 5/00, H02K 7/116, H02K 7/14, E05F 15/16

(54) **VORRICHTUNG UND VERFAHREN ZUM VERBINDEN EINER GETRIEBE-ANTRIEBSEINHEIT MIT EINEM KAROSSERIETEIL EINES KRAFTFAHRZEUGS**
DEVICE AND METHOD FOR FIXING A GEARBOX DRIVE UNIT TO A MOTOR VEHICLE BODYWORK PART
PROCEDE ET DISPOSITIF DE FIXATION D'UNE UNITE ENTRAINEMENT A ENGRENAGE A UNE PARTIE DE LA CARROSSERIE D'UN VEHICULE A MOTEUR

(30) Priorität: 29.06.2005 DE 102005030216
(43) Veröffentlichungstag der Anmeldung: 26.03.2008
(73) Patentinhaber: ROBERT BOSCH GMBH, 70442 Stuttgart (DE)
(72) Erfinder: STEUER, Peter, 76149 Karlsruhe (DE); SCHEER, Dieter, 77830 Buehlertal (DE)
(86) Internationale Anmeldenummer: PCT/EP2006/062370
(87) Internationale Veröffentlichungsnummer: WO 2007/000377

(56) Entgegenhaltungen:
- FR-A- 2 863 323
- US-A- 4 625 134
- US-A- 5 890 321
- PATENT ABSTRACTS OF JAPAN Bd. 2000, Nr. 24, 11. Mai 2001 (2001-05-11) & JP 2001 199236 A (YAZAKI CORP), 24. Juli 2001 (2001-07-24)

## Beschreibung

### Stand der Technik

Die Erfindung betrifft eine Vorrichtung, sowie ein Verfahren zum Verbinden einer Getriebe-Antriebseinheit mit einem Karosserieteil eines Kraftfahrzeugs nach der Gattung der unabhängigen Ansprüche.

Mit der DE 103 35 014 A1 ist eine Getriebe-Antriebseinheit zum Verstellen von beweglichen Teilen im Kraftfahrzeug bekannt geworden, die mittels Anschraubdomen an einem Karosserieteil befestigt wird. Um eine identische Getriebe-Antriebseinheit an verschiedenen kundenspezifischen Anschraubbildern der Karosserie anzubinden, sind die Befestigungsdome verschiebbar an der Getriebe-Antriebseinheit angeordnet, so dass die Anschraubpunkte der Getriebe-Antriebseinheit entsprechend des kundenspezifischen Karosserieteils variiert werden können, ohne das Gehäuse der Antriebseinheit abzuändern. Eine solche Befestigung der Getriebe-Antriebseinheit ist zwar relativ variabel, jedoch müssen bei deren Montage die Anschraubdome in korrekter Weise positioniert werden. Außerdem ist das Anschrauben oder Nieten, sowie das Vorhalten dieser Verbindungsmittel ein relativ aufwendiger Prozess-Schritt.

Mit der US-A-5890321 ist ein elektrischer Fensterheber bekannt geworden, bei dem ein Getriebegehäuse an einer Montageplatte befestigt wird. Mittels einer Drehbewegung des Getriebegehäuses gegenüber der Montageplatte wird hierbei ein Formschluss geschaffen, der das Getriebegehäuse mit der Montageplatte verbindet.

Die FR-A-2863323 zeigt ebenfalls einen Verstellantrieb, der an einem festen Bauteil befestigt wird. Dabei wird ein Deckel eines Getriebegehäuses mittels einer Drehbewegung gegenüber dem festen Bauteil formschlüssig verschlossen.

### Vorteile der Erfindung

Die erfindungsgemäße Vorrichtung und das erfindungsgemäße Verfahren zum Verbinden einer Getriebe-Antriebseinheit mit einem Karosserieteil mit den Merkmalen der unabhängigen Ansprüche haben den Vorteil, dass durch die Anbindung der Getriebe-Antriebseinheit an das Karosserieteil mittels einer bajonettartigen Befestigungsgeometrie, komplett auf die Befestigungsschrauben und den Anschraubprozess verzichtet werden kann. Dadurch verringert sich die Taktzeit und die Teilevielfalt bei der Montage deutlich. Durch die Anformung radialer Stege sowohl am Karosserieteil, als auch an der Getriebe-Antriebseinheit, kann letztere durch eine einfache Drehbewegung des Bajonettverschlusses sehr schnell und ohne zusätzliches Werkzeug an der Karosserie befestigt werden.
In einer bevorzugten Ausführung der Verbindungsvorrichtung greifen die radialen Stege der Getriebe-Antriebseinheit bei deren Montage axial derart zwischen die radialen Stege des Karosserieteils, dass sich durch eine einfache Drehung der Getriebeantriebseinheit die radialen Stege in Umfangsrichtung übereinander schieben, wodurch eine zuverlässige, axiale Fixierung gewährleistet ist. Um ein Öffnen des Bajonettverschlusses im Betrieb zuverlässig zu verhindern, ist die Verbindung zwischen dem Karosserieteil und der Antriebseinheit mittels einer Drehverriegelung gesichert. Die Drehverriegelung wird bei der Montage der Antriebseinheit automatisch aktiviert und kann zur gezielten Demontage der Getriebe-Antriebseinheit wieder gelöst werden. Für die erfindungsgemäße Verbindungsvorrichtung erweist sich die Verwendung einer Getriebe-Antriebseinheit als vorteilhaft, bei der die radialen Stege direkt am Getriebegehäuse der Antriebseinheit angeformt sind. Diese können beispielsweise einstückig mit dem Getriebegehäuse als Spritzgussteil aus Kunststoff hergestellt werden..

Durch die in den Unteransprüchen ausgeführten Merkmale, sind vorteilhafte Weiterbildungen der Vorrichtung und des Verfahrens nach den unabhängigen Ansprüchen möglich. Besonders günstig ist es, die radialen Stege des Karosserieteils, sowie der Getriebe-Antriebseinheit konzentrisch zum Abtriebselement anzuordnen, da dann im Bereich der Momentübertragung eine sehr hohe mechanische Stabilität erzeugt wird. Durch die Ausbildung mehrerer Radialstege über einen Umfangswinkel von kleiner oder gleich 90°, können mehrere Stege an beiden Verbindungsstellen angeordnet werden, die bajonettartig ineinander greifen können.

Die radialen Stege sind bezüglich der Schließrichtung des Bajonettverschlusses derart ausgeformt, dass das Übereinanderschieben der Bajonett-Elemente durch eine angeformte Phase oder schräge Fläche vereinfacht wird. Dadurch wird praktisch das "Einfädeln" der radialen Stege beim Schließen des Bajonettverschlusses erleichtert. Alternativ oder zusätzlich können die Phasen auch am separaten Befestigungsring des Bajonettverschluss angeformt sein.

In einer alternativen Ausführung der Verbindungsvorrichtung liegen die radialen Stege der Antriebseinheit und des Karosserieteils axial aneinander an, wobei deren axiale Verbindung für einen zusätzlichen Befestigungsring erzielt wird, der ebenfalls bajonettartige, radiale Befestigungslaschen aufweist, die nach Art eines Bajonettverschlusses in Umfangsrichtung über die radialen Stege geschoben werden. Bei dieser Ausführung des Bajonettverschlusses braucht die Getriebe-Antriebseinheit nicht gegenüber dem Karosserieteil verdreht werden, sondern nur der Befestigungsring. Das hat den Vorteil, dass bei einer selbsthemmenden Antriebseinheit die karosserieseitige Verstellmechanik bei der Montage der Getriebe-Antriebseinheit nicht in Bewegung versetzt werden muss.

Besonders günstig ist es, die Drehverriegelung in einem Bereich zwischen dem Karosserieteil und der Antriebseinheit radial außerhalb der radialen Stege anzuformen, da bei größerem Radius bezüglich der Abtriebswelle ein größeres Sperrmoment erzielt wird. Die Drehverriegelung verhindert eine unerwünschte Drehung der Antriebseinheit durch einen axialen Formschluss zwischen dem Karosserieteil und der Getriebe-Antriebseinheit, in dem ein Halteelement axial in ein korrespondierendes Gegenelement eingreift.

In der Erfindung weist die Drehverriegelung mindestens ein Federelement auf, das bei der Drehung während des Montageprozesses in ein entsprechendes Gegenrastelement einrastet. Solche Rast- oder Clips-Elemente können zur Demontage der Antriebseinheit aufgrund der leicht zugänglichen Anordnung radial außerhalb der Anstiege leicht gelöst werden.

Mittels einer Drehverriegelung können besonders günstig Getriebe-Antriebseinheiten an die Karosserie angebunden werden, die im vor- und rückwärts - Betrieb arbeiten, wie dies beispielsweise bei Fensterhebern, Schiebedächern oder Sitzverstellungen der Fall ist. Aufgrund des ständigen Drehmomentwechsels ist es hierbei besonders wichtig, dass die Drehverriegelung ein Lösen des Bajonettverschlusses in Drehrichtung zuverlässig verhindert. Wird ein separater Befestigungsring des Bajonettverschluss verwendet, können damit auch selbsthemmende Antriebseinheiten ohne großen Kraftaufwand einfach montiert werden.

Von besonderem Vorteil ist die Verwendung einer solchen Verbindungsvorrichtung für die Anbindung eines Schiebedachantriebs an einem Dachrahmen des Kraftfahrzeugs. Hierbei kann das als Abtriebsritzel ausgebildete Abtriebselement direkt axial in die Steigwendel der Schiebedach-Mechanik eingeführt werden und durch eine einfache Drehbewegung des Bajonettverschlusses zuverlässig fixiert werden. Dadurch wird die Montagezeit und damit die Herstellungskosten deutlich reduziert.

Ist das Karosserieteil als Befestigungsflansch ausgebildet, kann der vorteilhafte Bajonettverschluss an der Antriebseinheit schon realisiert werden, auch wenn die kundenseitige Anschluss-Stelle der Karosserie noch keine Bajonettelemente aufweist. Diese Ausführung dient jedoch nicht nur als Übergangslösung, sondern der Befestigungsflansch kann auch allgemein als Adapterelement für beliebige karosserieseitigen Kundenschnittstellen dienen, bei denen immer die identische Antriebseinheit verwendet werden kann.

Als Gegenstück der erfindungsgemäßen Verbindungsvorrichtung eignet sich ein Karosserieteil, an dem die radialen Stege ebenfalls direkt angeformt sind. Dies kann beispielsweise als Blechstanzteil, oder als Kunststoffspritzgussteil ausgebildet sein.

Das erfindungsgemäße Verfahren zum Verbinden einer Getriebe-Antriebseinheit mit einem Karosserieteil ermöglicht ein besonders zeitsparendes und dadurch kostengünstiges Montageverfahren, da der Bajonettverschluss durch eine einfache Drehung geschlossen und zuverlässig gegen ein Loslösen gesichert werden kann. Bei einem bevorzugten Montageverfahren werden die beiden Bauteile mit den radialen Stegen axial ineinander geschoben, so dass das Abtriebselement mit der Verstellmechanik koppelt und durch die anschließende Drehung der Getriebe-Antriebseinheit werden einerseits die radialen Stege der beiden Bauteile hintereinander geschoben und gleichzeitig die Drehverriegelung verrastet. Ein solch extrem einfaches Montageverfahren stellt für den Kunden einen großen Vorteil dar, der eine komplett montierte Getriebe-Antriebeinheit bezieht und diese problemlos an sein kundenspezifisches Karosserieteil befestigen kann.

Bei einem alternativen Montageverfahren wird nicht die gesamte Getriebe-Antriebseinheit gegenüber dem Karosserieteil verdreht, sondern nur der separate Befestigungsring des Bajonettverschlusses. Dies hat den Vorteil, dass kein Drehmoment für die Bewegung der Verstellmechanik oder des Getriebes der Antriebseinheit aufgebracht werden muss. So können durch einfaches axiales Einführen Antriebseinheit und Verdrehen des Befestigungsrings auch selbsthemmend ausgeführte Antriebeinheiten in äußerst einfacher Weise zuverlässig montiert und mittels der formschlüssigen Drehverriegelung gegen ein Loslösen gesichert werden.

### Zeichnungen

In der Zeichnung sind verschiedene Ausführungsbeispiele der erfindungsgemäßen Verbindungsvorrichtung dargestellt und in der nachfolgenden Beschreibung näher erläutert.
Es zeigen
Figur 1 eine teilweise Ansicht einer erfindungsgemäßen Getriebe-Antriebseinheit,
Figur 2 eine bajonettartige Verbindungsvorrichtung im Schnitt,
Figur 3a und 3b Schnitte durch den Bajonettverschluss (Abwicklung) und die Drehverriegelung in geöffnetem Zustand,
Figur 4a und 4b eine Darstellung gemäß Figur 3a und 3b bei geschlossenem Bajonettverschluss,
Figur 5 eine weitere Verbindungsvorrichtung im Schnitt,
Figur 6 die Ansicht eines Befestigungsring eines Bajonettverschluss,
Figur 7 einen Schnitt (Abwicklung) festen Bajonettverschluss der Figur 5 in geöffnetem Zustand,
Figur 8 ein weiteren erfindungsgemäßen Bajonett-Verschluss mit einem Befestigungsflansch, und
Figur 9 Ein Karosserieteil mit Bajonett-Elementen.

### Beschreibung der Ausführungsbeispiele

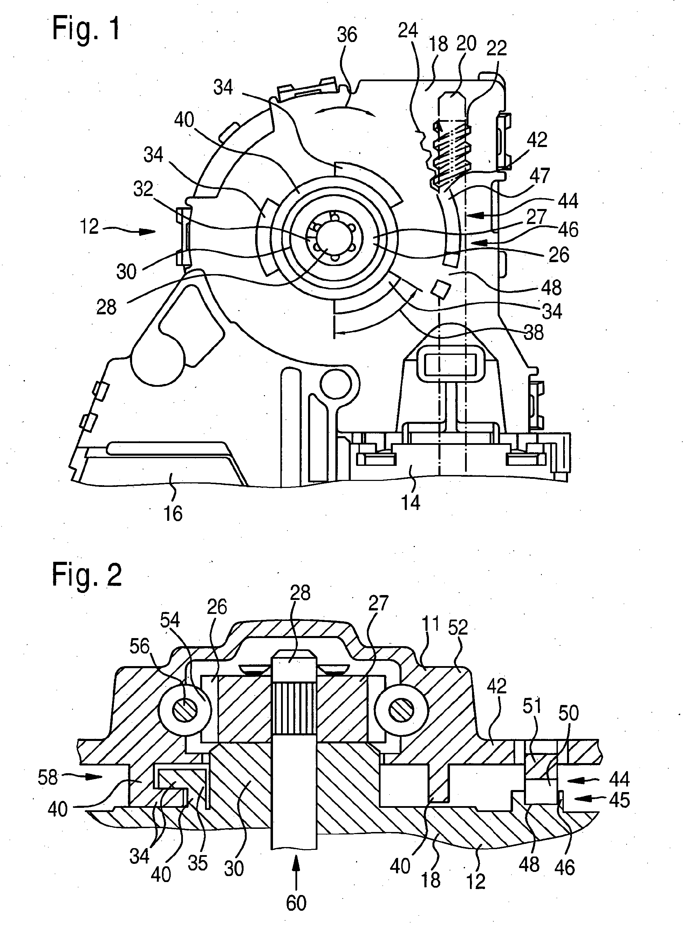

In Figur 1 ist eine Getriebe-Antriebseinheit 12 dargestellt, die einen Elektromotor 14, ein Elektronikgehäuse 16 und ein Getriebegehäuse 18 aufweist. Der Elektromotor 14 weist eine nicht näher dargestellte Ankerwelle 20 mit einer Schnecke 22 auf, die mit einem im Getriebegehäuse 18 gelagerten Schneckenrad 24 kämmt. Das Schneckenrad 24 ist gemeinsam mit einem Abtriebselement 26 auf einer Abtriebswelle 28 gelagert. Die Abtriebswelle 28 ragt durch einen Führungsdom 30 aus dem Getriebegehäuse 18 aus, so dass als Abtriebselement 26 ein Abtriebsritzel 27 mittels eines Sicherungsring 32 außerhalb des Getriebegehäuses 18 auf der Abtriebswelle 28 gelagert ist. Im Ausführungsbeispiel sind am Getriebegehäuse 18 einstückig mit diesem radiale Stege 34 angeformt. Im Ausführungsbeispiel sind drei solcher radialen Stege 34 an der Getriebe-Antriebseinheit 12 angeordnet, die sich jeweils über einen Winkelbereich 38 in Umfangsrichtung 36 von etwa 60° erstrecken. Die radialen Stege 34 sind über eine axiale Hülse 40 mit dem Getriebegehäuse 18 verbunden, diese Hülse 40 kann in einer alternativen Ausführung jedoch auch als Ringsegmente ausgebildet sein. In einer weiteren Variation sind die radialen Stege 34 direkt am Führungsdom 30 angeformt. An einem radial außerhalb der radialen Stege 34 angeordneten Bereich 42 ist als Teil einer Drehverriegelung 44, ein Gegenelement 46 in Form einer axialen Aussparung 48 mit einer Rampe 47 ausgebildet, in die ein an einem Karosserieteil 11 angeformtes Halteelement 50 eingreifbar ist. Aufgrund der am Getriebegehäuse 18 angeformten radialen Stege 34 zur Verbindung mit dem Karosserieteil 11 sind an der Getriebe-Antriebseinheit 12 keine Anschraubdome oder sonstigen Verbindungselemente angeordnet. Die Anbindung kann hierbei ausschließlich über einen Bajonettverschluss 58 realisiert werden.

In Figur 2 ist eine Getriebe-Antriebseinheit 12 mit einem Karosserieteil 11 verbunden, das als Dachrahmen 52 eines Kraftfahrzeugs ausgebildet ist. Im Karosserieteil 11 ist eine Mechanik 54 gelagert, mit der ein bewegliches Teil im Kraftfahrzeug, beispielsweise ein Schiebedach, verstellt werden kann. Die Verstellmechanik 54 wird von zwei Steigwendeln 56 gebildet, die mit dem zu verstellenden Teil (Schiebedach) verbunden sind. In fertig montiertem Zustand der Getriebe-Antriebseinheit 12 greift das Abtriebselement 26 in die Verstellmechanik 54 ein und ist mittels eines Bajonettverschlusses 58 fest mit dem Karosserieteil 11 verbunden. Das Karosserieteil 11 weist - wie die Getriebe-Antriebseinheit 12 - ebenfalls bajonettartige, radiale Stege 34 auf, die in verbundenem Zustand in Art des Bajonettverschlusses 58 ineinander greifen.

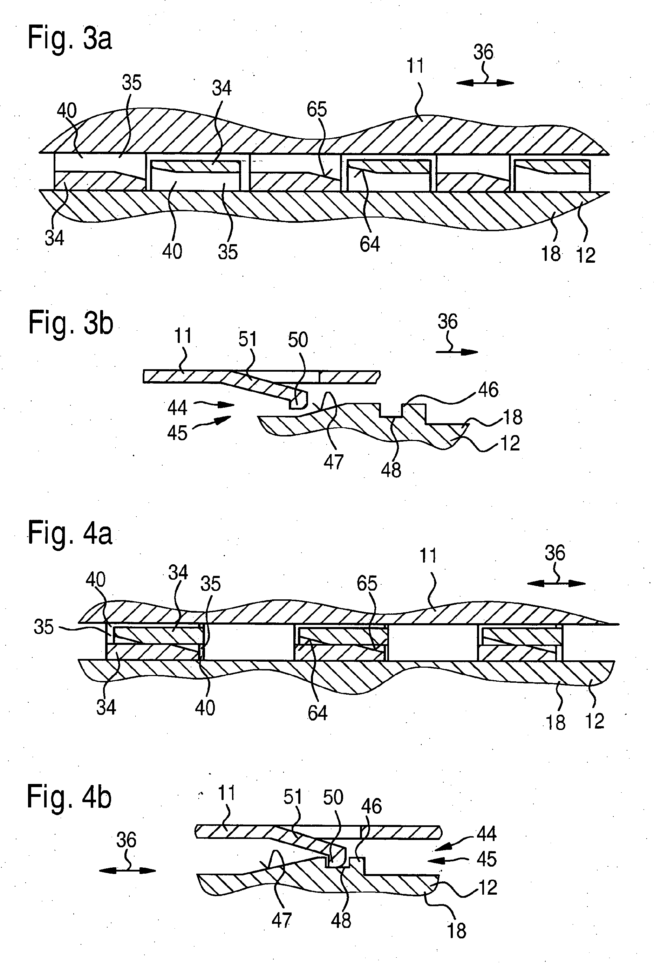

Zur Montage der Getriebe-Antriebseinheit 12 wird diese mit dem Abtriebselement 26 in axialer Richtung 60 in die Mechanik 54 des Karosserieteils 11 derart eingeführt, dass eine Übertragung des Drehmoment gewährleistet ist. In dieser so genannten Montagestellung (geöffneter Bajonettverschluss 58), die in Figur 3a und 3b dargestellt ist, greifen die radialen Stege 34 der Antriebseinheit 12 und des Karosserieteils 11 bezüglich der Umfangsrichtung 36 zahnartig ineinander. Die Anbindung der radialen Stege 34 über axiale Fortsätze 35 oder über entsprechende Hälsen 40 ist in Figur 3a schematisch dargestellt. In Figur 3a greifen die radialen Stege 34 der Antriebseinheit 12 mit ihren axialen Fortsätzen 35 in axialer Richtung 60 hintereinander. Die radialen Stege 34 der Antriebseinheit 12 erstrecken sich dabei vom axialen Fortsatz 35 radial nach außen, während sich die radialen Stege 34 des Karosserieteils 11 bezüglich ihrer axialen Fortsätze 35 radial nach innen erstrecken. Dies ermöglicht ein Hintereinandergreifen der jeweiligen radialen Stege 34, die bei einem Drehschluss der Bajonettverbindung 58 die Antriebseinheit 12 axial gegenüber dem Karosserieteil 11 fixieren. Die radialen Stege 34 weisen jeweils eine Phase 64 bzw. schräge Flächen 65 auf, so dass die radialen Stege beim Verschließen des Bajonettverschlusses 58 in Umfangsrichtung 36 leicht hintereinander geschoben werden können. Figur 3b zeigt die Drehverriegelung 44 in der so genannten Montagestellung, bei der das Halteelement 50 noch nicht in das Gegenelement 46 eingerastet ist.

Wird nun die Getriebe-Antriebseinheit 12 in Verbindung mit dem Karosserieteil 11 in Umfangsrichtung 36 gedreht, wird der Bajonettverschluss 58 geschlossen, wie dies in der Verriegelungsstellung in Figur 4a und Figur 4b dargestellt ist. In Figur 4a liegen die radialen Stege 34 der Antriebseinheit 12 und des Karosserieteils 11 axial hintereinander aneinander an, so dass die Antriebseinheit 12 axial gegenüber dem Karosserieteil 11 fixiert ist. Durch die Drehung beim Schließen des Bajonettverschlusses 58 ist das Haltelement 50, das in diesem Fall als axial federndes Rastelement 51 ausgebildet ist in das Gegenelement 46 eingerastet. Somit bildet das Halteelement 50 zusammen mit dem Gegenelement 46 ein axialen Formschluss 45, der in der Verriegelungsstellung ein unerwünschtes Verdrehen der beiden Bauteile 12, 11 gegeneinander verhindert. Zum Lösen der Drehverriegelung kann das Rastelement 51, das radial außerhalb der radialen Stege 34 angeordnet ist, in einfacher Weise in der Darstellung gemäß Figur 4b nach oben gedrückt werden, wodurch eine Drehung zum Lösen der Bajonettverbindung 58 ermöglicht wird.

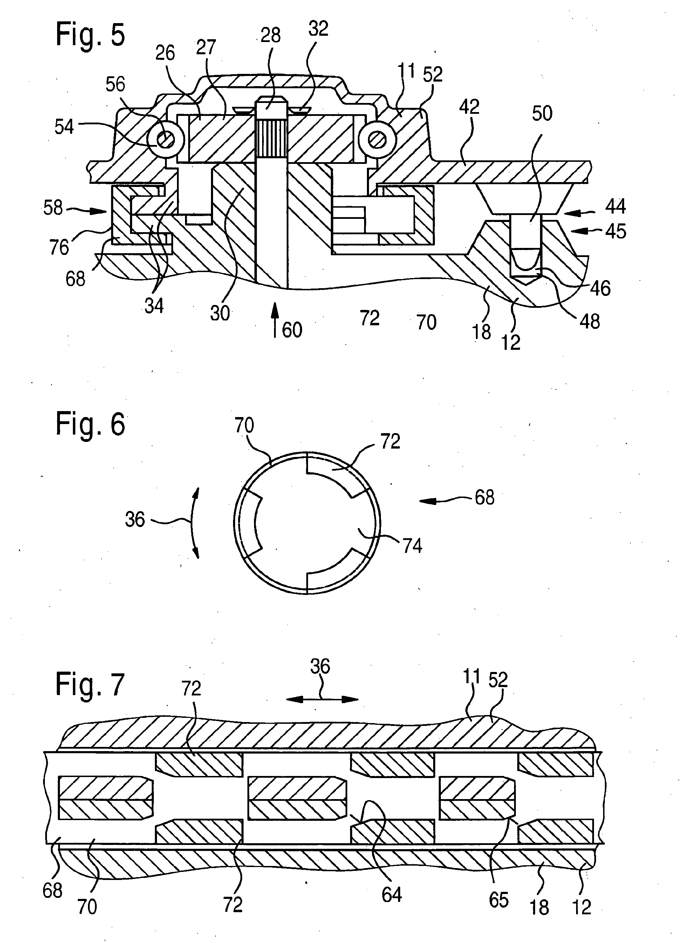

Figur 5 zeigt eine alternative Ausführung der erfindungsgemäßen Verbindungsvorrichtung 10, bei der wie in Figur 2 die Getriebe-Antriebseinheit 12 wieder über das Abtriebselement 26 in die Verstellmechanik 54 des Karosserieteils 11 eingreift. Im Unterschied zu Figur 2 weisen in diesem Ausführungsbeispiel sowohl die radialen Stege 34 der Antriebseinheit 12, als auch die Stege 34 des Karosserieteils 11 vom axialen Fortsatz 35 radial nach außen. Beim Einführen der Antriebseinheit 12 in axialer Richtung 60 in das Karosserieteil 11 liegen die radialen Stege 34 der beiden Bauteile 12, 11 axial aneinander an, ohne dass diese gegenseitig hintereinander greifen.

Diese Montagestellung ist als Abwicklung schematisch in Figur 7 dargestellt, wobei über den gesamten Umfang 36 wiederum jeweils 3 radiale Stege 34 angeformt sind, die in der Montagestellung deckungsgleich angeordnet sind. Die axiale Fixierung der beiden Bauteile 12 und 11 wird bei dieser Ausführung mittels eines zusätzlichen Befestigungsring 68 ausgeführt, der in Figur 6 dargestellt ist. Der Befestigungsring 68 weist einen geschlossenen Umfang 70 auf, an dem an beiden Stirnseiten jeweils radiale Befestigungslaschen 72 angeformt sind, die als Winkelsegmente 38 ausgebildet sind, zwischen denen in Umfangsrichtung 36 in etwa gleichgroße Ausnehmungen 74 ausgeformt sind. In Figur 7 ist ein Schnitt durch die radialen Stege 34 und den Befestigungsring 68 in der Montagestellung dargestellt, bei dem die radialen Befestigungslaschen 72 bezüglich der Umfangsrichtung 36 zwischen den deckungsgleich liegenden radialen Stegen 34 der Bauteile 12 und 11 angeordnet sind. In dieser Montagestellung kann der Befestigungsring 68 in axialer Richtung 60 über die radialen Stege 34 geschoben werden, so dass die radialen Stege 34 der beiden Bauteile 12, 11 axial zwischen den Befestigungslaschen 72 angeordnet sind. In der Montagestellung wird gleichzeitig das Halteelement 50 in axialer Richtung 60 in das Gegenelement 46 der Drehverriegelung 44 eingeführt. Dadurch wird ein axialer Formschluss 45 geschaffen, der ein Verdrehen der Antriebseinheit 12 gegenüber dem Karosserieteil 11 verhindert. Zur axialen Fixierung der beiden Bauteile 11 und 12 zueinander wird nun in einem weiterer Montageschritt der Befestigungsring 68 in Umfangsrichtung 36 gedreht, so dass die Befestigungslaschen 72 mit den radialen Stegen 34 in Umfangsrichtung 36 überlappen. Somit ist die Antriebseinheit 12 ebenso zuverlässig drehsicher am Karosserieteil 11 fixiert, wie dies in der Verriegelungsstellung in Figur 5 dargestellt ist. Bei dieser Schnittdarstellung ist zu erkennen, dass die Befestigungsflansche 72 zusammen mit dem geschlossenem Umfang 70 des Befestigungsrings 68 u-förmige Klammern 76 bilden, die die radialen Stege 34 der beiden Bauteile 11, 12 in axialer Richtung 60 umfassen (siehe linke Seite der Figur 5). Bei dieser Ausführung übernehmen die radialen Befestigungslaschen 72 des Befestigungsrings 68 die Funktion der radialen Stege 34 des Karosserieteils 11 aus Figur 2, da sich die Befestigungslaschen 72 ebenfalls radial nach innen erstrecken.

Auf diese Weise kann die Getriebe-Antriebseinheit 12 in sehr einfacher Weise an das Karosserieteil 11 angebunden werden, ohne die Getriebe-Antriebseinheit 12 verdrehen zu müssen. Die Antriebseinheit 12 wird in Montagestellung axial in das Karosserieteil 11 eingefügt und gleichzeitig ein axialer Formschluss 45 als Drehverriegelung 44 geschaffen. In einem zweiten Verfahrensschritt wird der vormontierte Befestigungsring 68 gegenüber den beiden Bauteilen 11 und 12 in Umfangsrichtung 36 verdreht und dadurch die beiden Bauteile 11 und 12 axial gegeneinander fixiert.

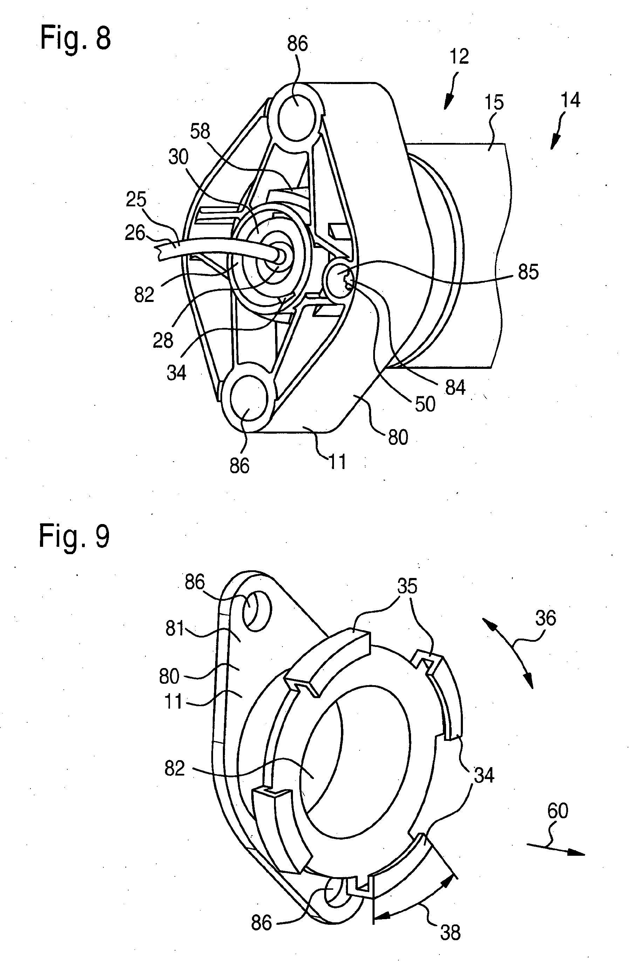

In Figur 8 ist einweiteres Beispiel einer Verbindungsvorrichtung 10 dargestellt, bei der die Antriebseinheit 12 mittels eines Bajonettverschlusses 58 mit dem Karosserieteil 11 verbunden ist, das hier als Befestigungsflansch 80 ausgebildet ist. Der Befestigungsflansch 80 weist einen zentralen Durchbruch 82 auf, an dessen Umfang die radialen Stege 34 ausgeformt sind, die nach Aufschieben in axialer Richtung 60 und einer Drehbewegung in Umfangsrichtung 36 hinter die radialen Stege 34 der Antriebseinheit 12 greifen. Die radialen Stege 34 der Antriebseinheit 12 sind in Figur 8 nicht sichtbar und sind hier direkt am Elektromotor 14, insbesondere einteilig mit einem Polgehäuse 15 als radiale Aussparungen oder radiale Fortsätze aus Metall ausgebildet. Als Drehverriegelung 44 ist ein Stift 84 als Halteelement 50 axial durch ein Loch 85 des Befestigungsflansches 80 formschlüssig in das Gegenelement 46 in der Antriebseinheit eingefügt. Das Gegenelement 46 ist als axiale Vertiefung 48 ausgebildet, wobei das Halteelement 50 hier erst nach der Drehbewegung zum Schließen des Bajonettverschlusses 58 eingeführt wird um einen axialen Formschluss 45 zu bilden, der den Bajonettverschluss 58 verriegelt. Der Befestigungsflansch 80 weist Aufnahmen 86 für separate Verbindungsmittel auf, mit der der Befestigungsflansch 80 als Karosserieteil 11 an einem weiteren Karosserieteil 11 befestigt werden kann. Ein solcher Befestigungsflansch 80 mit Bajonettverschluss 58 ist besonders dann einsetzbar, wenn die Schnittstelle der Antriebseinheit 12 schon auf einen Verbindungsmittelfreiem Bajonettverschluss 58 umgestellt wurde, die kundenspezifische karosserieseitige Schnittstelle jedoch noch mit Anschraubpunkten ausgestattet ist. Daher stellt ein solcher Befestigungsflansch 58 eine Übergangslösung, bzw. einen Adapter 80 für unterschiedliche Karosserieanbindungen dar. Das Abtriebselement 26 ist als Flexwelle 25 ausgebildet, die innerhalb des Gehäuses 15, 18 formschlüssig in die Abtriebswelle 28 greift. Bei dieser Ausführung ist das Getriebe der Getriebe-Antriebseinheit 12 beispielsweise am Karosserieteil 11 oder am zu verstellenden beweglichen Teil angeordnet.

Figur 9 zeigt einen weiteres Karosserieteil 11, das als Befestigungsflansch 80 ausgebildet ist. Dieser weist wiederum Aufnahmen 86 für Verbindungsmittel zur Befestigung an einem weiteren Karosserieteil 11 auf und stellt eine alternative Ausführung zum Befestigungsflansch 80 in Figur 8 dar. Der Befestigungsflansch 80 ist als einstückiges Biegestanzteil 81 ausgebildet und weist radiale Stege 34 auf, die über axiale Fortsätze 35 mit dem Befestigungsflansch 80 verbunden sind. Mittig innerhalb der Stege 34 ist wieder der Durchbruch 82 angeordnet, in den ein Abtriebselement 26 und/oder ein Führungsdom 30 der Getriebeantriebseinheit 12 eingreifbar ist. Der Befestigungsflansch wird bajonettartig zuerst axial aufgeschoben, wobei die radialen Stege 34 des Befestigungsflansches 80 zahnartig zwischen die radialen Stege 34 der Antriebseinheit 12 eingreifen und anschließend gedreht, so dass sich die radialen Stege 34 gegenseitig hintereinander geschoben werden. Als Verriegelung 44 des Bajonettverschlusses 58 wird in diesem Fall Material des Befestigungsflansches 80 plastisch verformt und beispielsweise in entsprechende als Gegenelemente 50 ausgebildete Ausformungen gedrückt. Bevorzugt werden die radialen Stege 34 des Befestigungsflansches 80 nach dem Schließen des Bajonettverschlusses 58 plastisch gegen Gegenelemente 50 an der Antriebseinheit 80 verformt, wodurch ein axialer Formschluss 45 oder eine kraftschlüssige Verriegelung 44 erzeugt wird.

Es sei angemerkt, dass hinsichtlich in den Figuren und der Beschreibung gezeigten Ausführungsbeispiele vielfältige Kombinationsmöglichkeiten der einzelnen Merkmale untereinander möglich sind. So kann beispielsweise die Anzahl und die konkrete Ausgestaltung der radialen Stege 34 und der Befestigungslaschen 72 und deren Anbindung an die Bauteile 12 und 11 beliebig variiert werden. Insbesondere können jeweils beispielsweise auch zwei oder vier radiale Stege 34 und/oder Befestigungslaschen 72 ausgebildet werden, wobei der Winkelbereich 38 der einzelnen Stege , bzw. der Zwischenräume dazwischen variieren kann und der Winkelbereich der Stege 34 und der Zwischenräume nicht gleich sein muss. Ebenso kann die Drehverriegelung 44 mit dem Halteelement 50 und Gegenelement 46 und deren Anordnung an den beiden Bauteilen 11 und 12 modifiziert werden. Die Antriebseinheit 12 wird bevorzugt direkt ohne weitere Verbindungsmittel an einem Karosserieteil 11 befestigt, kann aber auch mittels Bajonettverschluss 58 an einem als Befestigungsflansch 80 ausgebildeten Karosserieteil 11 verbunden werden, das wiederum auf beliebige Weise an der Karosserie befestigt ist. Bevorzugt wird die erfindungsgemäße Vorrichtung 10 und das erfindungsgemäße Verfahren für die Befestigung eines Schiebedachantriebs am Dachrahmen angewendet, kann aber auch für andere Verstellantriebe im Kraftfahrzeug, beispielsweise für Sitzverstellvorrichtungen eingesetzt werden.

## Patentansprüche

1. Vorrichtung (10) zum Verbinden einer Getriebe-Antriebseinheit (12) für einen Fensterheber oder ein Schiebedach mit einem Karosserieteil (11) eines Kraftfahrzeugs, wobei die Getriebe-Antriebseinheit (12) einen Elektromotor (14) aufweist, der mit einem auf einer Abtriebswelle (28) angeordneten Abtriebselement (26) gekoppelt ist, und das Abtriebselement (26) in eine am Karosserieteil (11) befestigte Mechanik (54) eingreifbar ist, um ein bewegliches Teil des Kraftfahrzeugs zu verstellen, wobei sowohl an dem Karosserieteil (11) als auch an der Getriebe-Antriebseinheit (12) bajonettartige radiale Stege (34) angeformt sind, mittels derer die Getriebe-Antriebseinheit (12) nach Art eines Bajonett-Verschlusses (58) am Karosserieteil (11) befestigbar ist, **dadurch gekennzeichnet, dass** die radialen Stege (34) einteilig an einem Getriebegehäuse (18) der Getriebe-Antriebseinheit (12) angeformt sind, und die Getriebe-Antriebseinheit (12) durch eine Drehung derselben gegenüber dem Karosserieteil (11) axial fixierbar ist, wobei zwischen der Getriebe-Antriebseinheit (12) und dem Karosserieteil (11) eine Drehverriegelung (44) angeordnet ist, die ein ungewolltes Lösen des geschlossenen Bajonettverschlusses (58) verhindert, und die Drehverriegelung (44, 45) als Rastelement (50, 51) ausgebildet ist, das bei der Drehung beim Schließen des Bajonettverschlusses (58) in ein entsprechendes Gegenrastelement (46, 48) einrastet.

2. Vorrichtung (10) nach Anspruch 1, **dadurch gekennzeichnet, dass** die radialen Stege (34) konzentrisch zur Abtriebswelle (28) angeordnet sind und sich über einen Winkelbereich (38) in Umfangsrichtung (36) erstrecken, der maximal 90° beträgt.

3. Vorrichtung (10) nach einem der Ansprüche 1 oder 2, **dadurch gekennzeichnet, dass** die radialen Stege (34) in Umfangsrichtung (36) eine Phase (64) oder eine angeschrägte Fläche (65) aufweisen, um eine Drehbewegung beim Schließen des Bajonett-Verschlusses (58) zu erleichtern.

4. Vorrichtung (10) nach einem der vorhergehenden Ansprüche, **dadurch gekennzeichnet, dass** die Getriebe-Antriebseinheit (12) als Schiebedachantrieb ausgebildet ist und das Abtriebselement (26) in montiertem Zustand in mindestens eine im Karosserieteil (11) gelagerte Steigwendel (56) eingreift, wobei das Karosserieteil (11) als Dachrahmen (52) eines Schiebedachs ausgebildet ist.

5. Vorrichtung (10) nach einem der vorhergehenden Ansprüche, **dadurch gekennzeichnet, dass** der Bajonettverschluss (58) einen zusätzlichen Befestigungsring (68) mit radialen Befestigungslaschen (72) aufweist, der zur axialen Fixierung der Getriebe-Antriebseinheit (12) am Karosserieteil (11) gegenüber den radialen Stegen (34) drehbar ist.

6. Vorrichtung (10) nach einem der vorhergehenden Ansprüche, **dadurch gekennzeichnet, dass** die Drehverriegelung (44, 45) radial außerhalb der radialen Stege (34) angeordnet ist und als Halteelement (50) ausgebildet ist, das insbesondere in axialer Richtung (60) formschlüssig in ein entsprechendes Gegenelement (46, 48) eingreift.

7. Vorrichtung (10) nach einem der vorhergehenden Ansprüche, **dadurch gekennzeichnet, dass** das Abtriebselement (26) in beide Drehrichtungen (36) ein Abtriebsmoment übertragen kann und das Abtriebselement (26) gegenüber dem Elektromotor (14) selbsthemmend ausgebildet ist.

8. Getriebe-Antriebseinheit (12) mit einem Getriebegehäuse (18) zur Verwendung in einer Vorrichtung (10) nach einem der vorhergehenden Ansprüche, **dadurch gekennzeichnet, dass** die radialen Stege (34) mittels Kunststoffspritzgießen hergestellt sind.

9. Karosserieteil (11) mit einer daran angeordneten Verstellmechanik (54) zur Verwendung in einer Vorrichtung (10) nach einem der vorhergehenden Ansprüche, **dadurch gekennzeichnet, dass** die radialen Stege (34) am Karosserieteil (11) angeformt sind und insbesondere einteilig mit diesem hergestellt sind.

10. Verfahren zum Verbinden einer Getriebe-Antriebseinheit (12) für einen Fensterheber oder ein Schiebedach mit einem Karosserieteil (11) nach einem der vorherigen Ansprüche, **gekennzeichnet durch** folgende Schritte:
- die Getriebe-Antriebseinheit (12) wird mit dem Abtriebselement (26) in axialer Richtung (60) in eine korrespondierende Verstell-Mechanik (54, 56) des Karosserieteils (11) eingeführt, derart, dass die radialen Stege (34) zahnartig ineinander greifen
- die Getriebe-Antriebseinheit (12) wird zum Schließen des Bajonettverschlusses (58) gegenüber dem Karosserieteil (11) verdreht, wobei die radialen Stege (34) in Drehrichtung (36) übereinander geschoben werden
- **durch** die Drehbewegung der Getriebe-Antriebseinheit (12) wird ein Rastelement (50, 51) des Karosserieteils (11) der Drehverriegelung (44, 45) derart ausgelenkt, dass dieses zur Drehfixierung in ein entsprechendes Gegenrastelement (46, 48) der Getriebe-Antriebseinheit (12) eingreift.

11. Verfahren zum Verbinden einer Getriebe-Antriebseinheit (12) mit einem Karosserieteil (11) nach einem der vorherigen Ansprüche, **gekennzeichnet durch** folgende Schritte:
- die Getriebe-Antriebseinheit (12) wird mit dem Abtriebselement (26) in axialer Richtung (60) in eine korrespondierende Verstell-Mechanik (54,56) des Karosserieteils (11) eingeführt, derart, dass die radialen Stege (34) axial aufeinander anliegen
- beim axialen Einführen der Getriebe-Antriebseinheit (12) wird ein Halteelement (50) der Drehverriegelung (44, 45) formschlüssig axial in ein entsprechendes Gegenelement (46, 48) der Getriebe-Antriebseinheit (12) eingeschoben
- der Befestigungsring (68) wird zum Schließen des Bajonettverschlusses (58) gegenüber dem Karosserieteil (11) und der Getriebe-Antriebseinheit (12) verdreht, wobei die radialen Befestigungslaschen (72) in Drehrichtung (36) über die radialen Stege (34) geschoben werden.

## Claims

1. Device (10) for connecting a gearbox drive unit (12) for a window lifter or a sliding roof to a motor vehicle bodywork part (11), the gearbox drive unit (12) having an electric motor (14) which is coupled to an output element (26) arranged on an output shaft (28), and the output element (26) being engageable into a mechanism (54) fastened to the bodywork part (11), in order to adjust a moveable part of the motor vehicle, there being integrally formed both on the bodywork part (11) and on the gearbox drive unit (12) bayonet-like radial webs (34), by means of which the gearbox drive unit (12) is fastenable to the bodywork part (11) in a bayonet fastening (58), **characterized in that** the radial webs (34) are integrally formed in one piece on a gear box housing (18) of the gearbox drive unit (12), and the gearbox drive unit (12), as result of rotation of the latter, is fixable axially with respect to the bodywork part (11), there being arranged between the gearbox drive unit (12) and the bodywork part (11) a rotary interlock (44) which prevents an unwanted release of the closed bayonet fastening (58), and the rotary interlock (44, 45) being designed as a latching element (50, 51) which, upon rotation during the closing of the bayonet fastening (58), latches into a corresponding counterlatching element (46, 48).

2. Device (10) according to Claim 1, **characterized in that** the radial webs (34) are arranged concentrically to the output shaft (28) and extend in the circumferential direction (36) over an angular range (38) amounting to at most 90°.

3. Device (10) according to either one of Claims 1 and 2, **characterized in that** the radial webs (34) have in the circumferential direction (36) a chamfer (64) or a bevelled surface (65), in order to facilitate a rotational movement during the closing of the bayonet fastening (58).

4. Device (10) according to one of the preceding claims, **characterized in that** the gearbox drive unit (12) is designed as a sliding-roof drive and, in the mounted state, the output element (26) engages into at least one rising helix (56) supported in the bodywork part (11), the bodywork part (11) being designed as a roof frame (52) of a sliding roof.

5. Device (10) according to one of the preceding claims, **characterized in that** the bayonet fastening (58) has an additional fastening ring (68) with radial fastening tabs (72), the said fastening ring being rotatable with respect to the radial webs (34) for the purpose of fixing the gearbox drive unit (12) axially to the bodywork part (11).

6. Device (10) according to one of the preceding claims, **characterized in that** the rotary interlock (44 ,45) is arranged radially outside the radial webs (34) and is designed as a holding element (50) which engages positively, particularly in the axial direction (60), into a corresponding counterelement (46 ,48).

7. Device (10) according to one of the preceding claims, **characterized in that** the output element (26) can transmit an output torque in both directions of rotation (36), and the output element (26) is designed to be self-locking with respect to the electric motor (14).

8. Gearbox drive unit (12) with a gearbox housing (18) for use in a device (10) according to one of the preceding claims, **characterized in that** the radial webs (34) are produced by means of plastic injection-moulding.

9. Bodywork part (11) with an adjustment mechanism (54), arranged thereon, for use in a device (10) according to one of the preceding claims, **characterized in that** the radial webs (34) are integrally formed on the bodywork part (11) and, in particular, are produced in one piece with the latter.

10. Method for connecting a gearbox drive unit(12) for a window lifter or a sliding roof to a bodywork part (11) according to one of the preceding claims, **characterized by** the following steps:
- the gearbox drive unit (12) is introduced with the output element (26) in the axial direction (60) into a corresponding adjustment mechanism (54, 56) of the bodywork part (11), in such a way that the radial webs (24) engage one in the other in a tooth-like manner,
- the gearbox drive unit (12) is rotated with respect to the bodywork part (11) in order to close the bayonet fastening (58), the radial webs (34) being pushed one over the other in the direction of rotation (36),
- as a result of the rotational movement of the gearbox drive unit (12), a latching element (50, 51) of the bodywork part (11) of the rotary interlock (44, 45) is deflected in such a way that the said latching element engages into a corresponding counterlatching element (46, 48) of the gearbox drive unit (12) for rotary fixing.

11. Method for connecting a gearbox drive unit (12) to a bodywork part (11) according to one of the preceding claims, **characterized by** the following steps:
- the gearbox drive unit (12) is introduced with the output element (26) in the axial direction (60) into a corresponding adjustment mechanism (54, 56) of the bodywork part (11), in such a way that the radial webs (34) bear axially one on the other,
- during the axial introduction of the gearbox drive unit (12), a holding element (50) of the rotary interlock (44, 45) is positively pushed axially into a corresponding counterelement (46, 48) of the gearbox drive unit (12),
- the fastening ring (68) is rotated with respect to the bodywork part (11) and to the gearbox drive unit (12) in order to close the bayonet fastening (58), the radial fastening tabs (72) being pushed over the radial webs (34) in the direction of rotation (36).

## Revendications

1. Dispositif (10) pour relier une unité d'entraînement de transmission (12) pour un lève-vitre ou un toit coulissant à une partie de carrosserie (11) d'un véhicule automobile, l'unité d'entraînement de transmission (12) comprenant un moteur électrique (14) qui est accouplé à un élément de sortie (26) disposé sur un arbre de sortie (28), et l'élément de sortie (26) pouvant être mis en prise dans un mécanisme (54) fixé à la partie de carrosserie (11), afin de régler une partie mobile du véhicule automobile, des nervures radiales (34) de type baïonnette étant formées tant sur la partie de carrosserie (11) que sur l'unité d'entraînement de transmission (12), au moyen desquelles nervures l'unité d'entraînement de transmission (12) peut être fixée à la partie de carrosserie (11) à la manière d'une fermeture à baïonnette (58), **caractérisé en ce que** les nervures radiales (34) sont formées d'un seul tenant sur un boîtier de transmission (18) de l'unité d'entraînement de transmission (12), et l'unité d'entraînement de transmission (12) peut être fixée axialement par une rotation de celle-ci par rapport à la partie de carrosserie (11), un verrouillage en rotation (44) étant disposé entre l'unité d'entraînement de transmission (12) et la partie de carrosserie (11), lequel verrouillage en rotation empêche une libération indésirable de la fermeture à baïonnette fermée (58), et le verrouillage en rotation (44, 45) étant réalisé sous forme d'élément d'encliquetage (50, 51) qui s'encliquète dans un élément d'encliquetage conjugué (46, 48) correspondant lors de la rotation lors de la fermeture de la fermeture à baïonnette (58).

2. Dispositif (10) selon la revendication 1, **caractérisé en ce que** les nervures radiales (34) sont disposées de manière concentrique à l'arbre de sortie (28) et s'étendent sur une zone angulaire (38) dans la direction périphérique (36), laquelle zone angulaire vaut au maximum 90°.

3. Dispositif (10) selon la revendication 1 ou 2, **caractérisé en ce que** les nervures radiales (34) présentent dans la direction périphérique (36) un chanfrein (64) ou une surface chanfreinée (65), afin de faciliter un mouvement de rotation lors de la fermeture de la fermeture à baïonnette (58).

4. Dispositif (10) selon l'une quelconque des revendications précédentes, **caractérisé en ce que** l'unité d'entraînement de transmission (12) est réalisée sous forme d'entraînement de toit coulissant et l'élément de sortie (26) vient en prise, à l'état monté, dans au moins un câble hélicoïdal (56) monté dans la partie de carrosserie (11), la partie de carrosserie (11) étant réalisée sous forme de cadre de toit (52) d'un toit coulissant.

5. Dispositif (10) selon l'une quelconque des revendications précédentes, **caractérisé en ce que** la fermeture à baïonnette (58) comprend une bague de fixation (68) supplémentaire pourvue de pattes de fixation radiales (72), laquelle bague de fixation peut être entraînée en rotation pour la fixation axiale de l'unité d'entraînement de transmission (12) sur la partie de carrosserie (11) par rapport aux nervures radiales (34).

6. Dispositif (10) selon l'une quelconque des revendications précédentes, **caractérisé en ce que** le verrouillage en rotation (44, 45) est disposé radialement à l'extérieur des nervures radiales (34) et est réalisé sous forme d'élément de retenue (50) qui vient en prise par complémentarité de formes, en particulier dans la direction axiale (60), dans un élément conjugué (46, 48) correspondant.

7. Dispositif (10) selon l'une quelconque des revendications précédentes, **caractérisé en ce que** l'élément de sortie (26) peut transmettre un moment de sortie dans les deux sens de rotation (36), et l'élément de sortie (26) est réalisé de manière autobloquante par rapport au moteur électrique (14).

8. Unité d'entraînement de transmission (12) comprenant un boîtier de transmission (18) pour l'utilisation dans un dispositif (10) selon l'une quelconque des revendications précédentes, **caractérisée en ce que** les nervures radiales (34) sont fabriquées par moulage par injection de plastique.

9. Partie de carrosserie (11) comprenant un mécanisme de réglage (54) disposé sur celle-ci pour l'utilisation dans un dispositif (10) selon l'une quelconque des revendications précédentes, **caractérisée en ce que** les nervures radiales (34) sont formées sur la partie de carrosserie (11) et sont en particulier fabriquées d'un seul tenant avec celle-ci.

10. Procédé pour relier une unité d'entraînement de transmission (12) pour un lève-vitre ou un toit coulissant à une partie de carrosserie (11) selon l'une quelconque des revendications précédentes, **caractérisé par** les étapes suivantes :
- l'unité d'entraînement de transmission (12) est introduite par l'élément de sortie (26) dans la direction axiale (60) dans un mécanisme de réglage (54, 56) correspondant de la partie de carrosserie (11), de telle sorte que les nervures radiales (34) s'engrènent les unes avec les autres à la manière de dents,
- l'unité d'entraînement de transmission (12) est tournée par rapport à la partie de carrosserie (11) pour fermer la fermeture à baïonnette (58), les nervures radiales (34) étant poussées les unes sur les autres dans le sens de rotation (36),
- un élément d'encliquetage (50, 51) de la partie de carrosserie (11) du verrouillage en rotation (44, 45) est dévié par le mouvement de rotation de l'unité d'entraînement de transmission (12), de telle sorte que cet élément d'encliquetage vienne en prise dans un élément d'encliquetage conjugué (46, 48) correspondant de l'unité d'entraînement de transmission (12) pour la fixation en rotation.

11. Procédé pour relier une unité d'entraînement de transmission (12) à une partie de carrosserie (11) selon l'une quelconque des revendications précédentes, **caractérisé par** les étapes suivantes :
- l'unité d'entraînement de transmission (12) est introduite par l'élément de sortie (26) dans la direction axiale (60) dans un mécanisme de réglage (54, 56) correspondant de la partie de carrosserie (11), de telle sorte que les nervures radiales (34) s'appliquent axialement les unes sur les autres,
- un élément de retenue (50) du verrouillage en rotation (44, 45) est inséré par complémentarité de formes axialement dans un élément conjugué (46, 48) correspondant de l'unité d'entraînement de transmission (12) lors de l'introduction axiale de l'unité d'entraînement de transmission (12),
- la bague de fixation (68) est tournée par rapport à la partie de carrosserie (11) et à l'unité d'entraînement de transmission (12) pour fermer la fermeture à baïonnette (58), les pattes de fixation radiales (72) étant poussées sur les nervures radiales (34) dans le sens de rotation (36).
